# FASCICULE DE BREVET EUROPEEN

(11) **EP 3 371 474 B1**
(45) Date de publication et mention de la délivrance du brevet: **11.09.2019**
(21) Numéro de dépôt: 16787879.2
(22) Date de dépôt: 27.10.2016
(51) Int. Cl.: F16D 13/70, F16D 21/06

(54) **SYSTEME DE TRANSMISSION COMPORTANT UN MECANISME A DOUBLE EMBRAYAGE HUMIDE**
ÜBERTRAGUNGSSYSTEM MIT DOPPELNASSKUPPLUNGSMECHANISMUS
TRANSMISSION SYSTEM COMPRISING A DUAL WET-CLUTCH MECHANISM

(30) Priorité: 06.11.2015 FR 1560662
(43) Date de publication de la demande: 12.09.2018
(73) Titulaire: Valeo Embrayages, 80009 Amiens Cedex 2 (FR)
(72) Inventeur: DOLE, Arnaud, 80009 Amiens (FR); THIBAUT, François, 80009 Amiens (FR); ARHAB, Rabah, 80009 Amiens (FR)
(86) Numéro de dépôt international: PCT/EP2016/075987
(87) Numéro de publication internationale: WO 2017/076752

(56) Documents cités:
- DE-A1-102007 041 575
- DE-A1-102009 047 953
- DE-B3-102008 048 801
- US-A1- 2013 153 355

## Description

La présente invention concerne un système de transmission comportant un mécanisme à double embrayage humide.

Un tel système de transmission est destiné à constituer une partie d'une transmission, notamment pour un véhicule automobile ou pour un véhicule dit industriel, ce dernier étant par exemple un poids lourd, un véhicule de transport en commun, ou un véhicule agricole.

La présente invention concerne plus particulièrement un système de transmission comportant un double embrayage humide mobile en rotation autour d'un axe de rotation principal, qui est commandé pour accoupler sélectivement un arbre menant d'un moteur à explosion à un premier arbre mené et à un deuxième arbre mené d'une boite de vitesses,
ledit mécanisme à double embrayage humide comportant au moins un premier embrayage et un deuxième embrayage respectivement de type multidisques, chacun desdits premier et deuxième embrayages comportant au moins un piston mobile axialement qui est commandé en déplacement au moyen d'une chambre de commande à laquelle est associée une chambre d'équilibrage délimitée au moins par un piston d'équilibrage, ledit piston venant serrer axialement dans une position embrayée un ensemble multidisques contre des moyens de réaction, ledit ensemble multidisques comportant des flasques et également des disques de friction liés en rotation par l'intermédiaire d'un porte-disques à l'un desdits premier et deuxième arbres menés.

On connaît de l'art antérieur de tels systèmes de transmission comportant un mécanisme à double embrayage humide (ou « Dual Wet Clutch » en anglais) généralement de type multidisques, ledit mécanisme étant implanté dans la cloche d'embrayage du véhicule automobile. Un tel système de transmission est connu de DE 10 2008 048 801 B3.

Dans certaines applications, notamment mais non exclusivement pour des véhicules dits industriels, la transmission de manière fiable de couples importants est recherchée tout en ayant une compacité axiale du système de transmission, afin par exemple d'en permettre l'implantation entre le moteur et la boite de vitesses du véhicule.

Le couple moteur à transmettre par les systèmes de transmission est en constante augmentation depuis plusieurs années, jusqu'à atteindre des valeurs de plus de 4000 Nm pour les véhicules dit industriel et des valeurs de plus de 500 Nm pour les véhicules automobiles. Les architectures connues de systèmes de transmission comportant un mécanisme à double embrayage humide, telles que décrites dans le document DE 10 2012 008 779, ne permettent pas de transmettre ces valeurs de couple avec une fiabilité satisfaisante dans un encombrement axial satisfaisant.

Dans le document DE 10 2012 008 779, le mécanisme à double embrayage comprend deux ensembles multidisques disposés axialement de part et d'autre de moyens de réaction distincts. Chaque ensemble multidisques comporte respectivement des disques de friction liés en rotation à l'arbre menant par l'intermédiaire d'un porte-disques extérieur et des flasques liés en rotation avec des porte-disques intérieurs de manière à transmettre le couple vers les arbres menés. Un espace axial important est aménagé entre les moyens de réaction afin d'éviter, lors de la fermeture d'un des deux embrayages, une mise en contact des moyens de réactions sous l'effet de la flexion sous charge générée par le piston mobile. Un tel agencement axial des embrayages n'est pas favorable pour la compacité du mécanisme à double embrayage humide et de l'ensemble de transmission.

Le but de la présente invention est notamment de proposer un système de transmission comportant un mécanisme à double embrayage humide permettant de résoudre au moins une partie des problèmes de l'art antérieur, en particulier la compacité axiale.

Dans ce but, l'invention propose un système de transmission, notamment pour un véhicule automobile, comportant autour d'un axe de rotation au moins :
- un moyeu d'entrée qui est agencé pour être lié en rotation à un arbre menant, et
- un mécanisme à double embrayage humide comportant :
   ∘ un organe d'entrée formé notamment par un porte-disques et lié en rotation au moyeu d'entrée pour transmettre le couple venant de l'arbre menant;
   ∘ au moins un premier embrayage et un deuxième embrayage comportant chacun un ensemble multidisques et un organe de réaction, l'ensemble multidisques venant en appui contre une zone de contact de l'organe de réaction lorsque l'embrayage associé est fermé,
caractérisé en ce que chaque organe de réaction comporte une portion de jonction sur l'organe d'entrée, et dans une direction axiale suivant l'axe de rotation, la zone de contact associée à l'un des embrayages est plus proche de la portion de jonction de l'organe de réaction associée à l'autre embrayage que de la portion de jonction associée à l'organe de réaction de cet embrayage.

Ce système de transmission, selon l'invention, présente l'avantage, grâce à la proximité axiale de la zone de contact de l'un des organes de réaction par rapport à la portion de jonction de l'autre organe réaction, de former un ensemble de réaction compact axialement. Autrement dit, l'espace axial aménagé entre les organes de réaction est réduit tout en évitant, lors de la fermeture d'un des deux embrayages, une mise en contact de ces organes de réactions sous l'effet de la flexion sous charge générée par le piston mobile.

De préférence, l'organe de réaction de l'un des embrayages comporte au moins une fente définissant un espace dans lequel est reçu partiellement l'organe de réaction de l'autre embrayage. Autrement dit, les organes de réaction des premier et deuxième embrayages se chevauchent axialement de manière à réduire l'encombrement axial.

L'invention peut présenter l'une ou l'autre des caractéristiques décrites ci-dessous combinées entre elles ou prises indépendamment les unes des autres :
- De préférence, les organes de réaction des premier et deuxième embrayages sont des pièces identiques.
- Le moyeu d'entrée est lié directement à l'organe d'entrée.
- L'organe d'entrée est formé par au moins un porte-disques.
- En variante, le moyeu d'entrée est lié à l'organe d'entrée par l'intermédiaire d'une pièce intermédiaire.
- L'organe de réaction est une pièce distincte de l'organe d'entrée.
- Les zones de contact respectives des organes de réactions sont orientées dans deux sens axiaux opposés et décalés angulairement.
- La zone de contact et la portion de jonction de l'un des organes de réaction, dans une direction axiale suivant l'axe de rotation, sont disposées sur des plans décalés axialement.
- La portion de jonction de l'un des organes de réaction, dans une direction axiale suivant l'axe de rotation, est disposée axialement entre la zone de contact associée à cet organe de réaction et la zone de contact associée à l'autre organe de réaction.
- L'organe de réaction de l'un des embrayages présente une distance d entre le milieu de l'épaisseur de la portion de jonction et la zone de contact, cette distance d étant supérieure ou égale à la somme de la demi-épaisseur de la portion de jonction associée à cet organe de réaction et de l'épaisseur de la portion de jonction associée à l'autre organe de réaction.
- Chaque organe de réaction comprend des zones de contact réparties angulairement autour de l'axe de rotation.
- Les zones de contact respectives des organes de réactions sont alternées les unes par rapport aux autres.
- Les zones de contact des premier et deuxième embrayages sont formées respectivement sur des pièces distinctes.
- Les zones de contact de l'un des embrayages sont formées sur une même pièce et les zones de contact de l'autre embrayage sont formées sur une autre pièce distincte.
- L'organe de réaction comporte une couronne liée à l'organe d'entrée.
- La portion de jonction est formée sur la couronne de l'organe de réaction.
- Avantageusement, les portions de jonction des premier et deuxième organes d'entrée sont plaquées l'une sur l'autre à l'aide d'un moyen de fixation, par exemple une série de rivet.
- En variante, la portion de jonction est formée par une cannelure qui vient en appui sur une cannelure formée sur le porte-disques de l'organe d'entrée.
- Par exemple, les portions de jonction des organes d'entrée sont séparées par un espace axial.
- Chaque zone de contact est formée par une patte de l'organe de réaction.
- Deux pattes consécutives de l'un des organes de réaction forment entre-elles une fente dans laquelle s'étend au moins partiellement une patte de l'autre organe de réaction.
- La patte comporte un coude sur lequel est formée la zone de contact.
- Les pattes sont réparties de manière régulière autour de l'axe de rotation.
- La patte s'étend sur un secteur angulaire compris entre 10° et 110°, de préférence entre 15° et 30°.
- Le mécanisme à double embrayage humide est commandé pour accoupler sélectivement ledit arbre menant à un premier arbre A1 mené et à un deuxième arbre A2 mené.
- La jante du premier organe de réaction et la jante du deuxième organe de réaction sont séparées axialement l'une de l'autre par un espace correspondant à un jeu « j ».

Ce système de transmission, selon l'invention, présente l'avantage, grâce au jeu axial entre les jantes des premier et deuxième organes de réaction de chacun des embrayages, d'éviter tout risque d'interaction entre les deux organes de réaction. Chacune des jantes peut se déplacer axialement sans entrer en contact avec l'autre sous l'effet de la flexion sous charge générée par le piston mobile de l'embrayage associé.

Selon un mode de mise en oeuvre avantageux de l'invention, la transmission du couple vers l'organe de réaction se fait depuis la périphérie externe de l'organe d'entrée. Un tel système de transmission peut présenter une ou plusieurs des autres caractéristiques suivantes :
- Le porte-disques de l'organe d'entrée est disposé radialement à l'extérieur de la zone de contact de l'organe de réaction.
- L'organe de réaction comporte une jante sur laquelle viennent se raccorder les pattes, la dite jante est disposée radialement à l'intérieur de la zone de contact de l'organe de réaction.

Selon un autre mode de mise en oeuvre avantageux de l'invention, la transmission du couple vers l'organe de réaction se fait depuis la partie centrale de l'organe d'entrée. Un tel système de transmission peut présenter une ou plusieurs des autres caractéristiques suivantes :
- Le porte-disques de l'organe d'entrée est disposé radialement à l'intérieur de la zone de contact de l'organe de réaction.
- L'organe de réaction comporte une jante sur laquelle viennent se raccorder les pattes, la dite jante est disposée radialement à l'extérieur de la zone de contact de l'organe de réaction.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une demi-vue en coupe axiale qui représente un système de transmission comportant un mécanisme à double embrayage humide selon un premier mode de réalisation de l'invention ;
- la figure 2 est une vue en perspective qui représente partiellement le mécanisme à double embrayage humide et qui illustre le premier mode de réalisation des organes de réaction selon l'invention ;
- la figure 3 est une demi-vue en coupe axiale qui représente un système de transmission comportant un mécanisme à double embrayage humide selon un deuxième mode de réalisation de l'invention ;
- les figures 4 et 5 sont des vues en coupe axiale qui représentent partiellement le mécanisme à double embrayage humide et qui illustre le deuxième mode de réalisation des organes de réaction selon l'invention.

Dans la suite de la description et les revendications, on utilisera à titre non limitatif et afin d'en faciliter la compréhension, les termes « avant » ou « arrière » selon la direction considérée par rapport à une orientation axiale déterminée par l'axe O de rotation et les termes « intérieur / interne » ou « extérieur / externe » par rapport à la distance avec l'axe O suivant une orientation radiale, orthogonale à ladite orientation axiale.

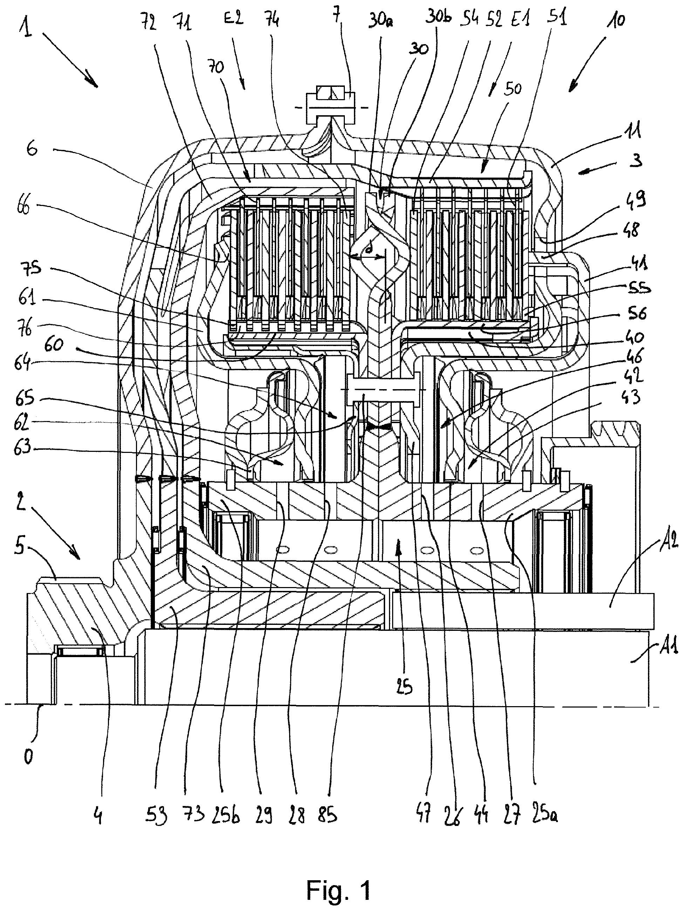

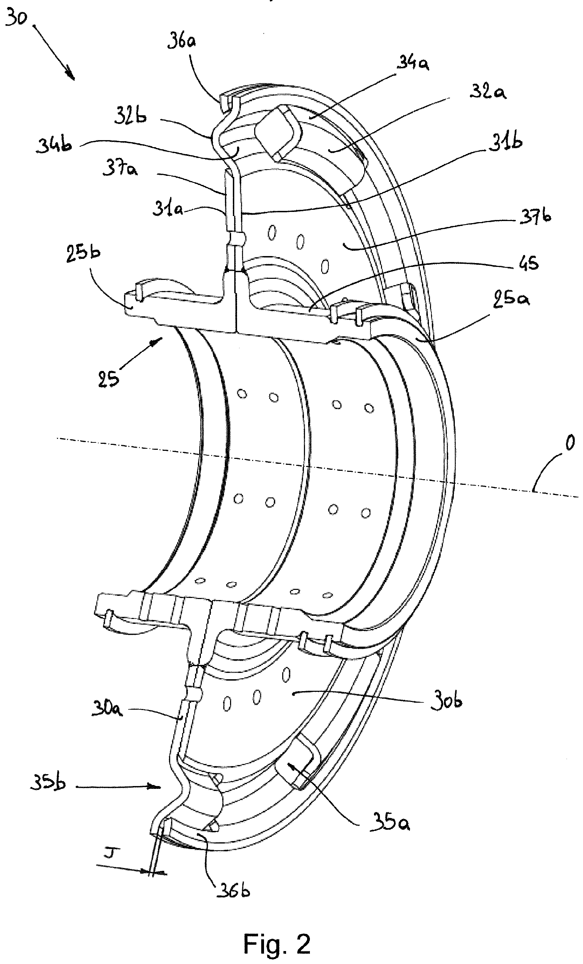

On a représenté sur les figures 1 et 2, un exemple de réalisation d'un système 1 de transmission, notamment pour un véhicule automobile, présentant un axe O de rotation.

Le système 1 de transmission comporte un moyeu d'entrée 2 agencé pour être lié en rotation à un arbre menant d'un moteur à explosion (non représenté) et un mécanisme 10 à double embrayage humide, mobile en rotation autour de l'axe O, qui est commandé pour accoupler sélectivement l'arbre menant à un premier arbre A1 mené et à un deuxième arbre A2 mené d'une boite de vitesses.

De préférence, le premier arbre A1 mené et le deuxième arbre A2 mené sont coaxiaux.

Le mécanisme 10 à double embrayage humide comporte notamment un organe d'entrée 3 lié en rotation au moyeu d'entrée 2, un premier embrayage E1 et un deuxième embrayage E2 qui sont respectivement de type multidisques.

L'organe d'entrée 3 transmet le couple venant de l'arbre menant depuis le moyeu d'entrée 2 jusqu'aux premier et deuxième embrayages E1, E2.

Comme illustré sur la figure 1, le moyeu d'entrée 2 est lié à l'organe d'entrée 3 par l'intermédiaire d'une coquille 6.

La coquille 6, présentant globalement une forme en « L », comporte une partie d'orientation radiale reliée par un coude à une partie d'orientation axiale. La coquille 6 est une pièce intermédiaire entre le moyeu d'entrée 2 et l'organe d'entrée 3.

Le moyeu d'entrée 2 comporte une partie d'orientation radiale et une partie d'orientation axiale 4, le moyeu d'entrée 2 étant agencé radialement à l'intérieur par rapport à la coquille 6.

La partie d'orientation axiale 4 du moyeu d'entrée 2 située à l'intérieur de la partie radiale, s'étend axialement vers l'arrière dans une direction correspondant à celle du moteur.

Le moyeu d'entrée 2 comporte des cannelures 5, ménagées dans la surface cylindrique externe de la partie axiale, pour la liaison en rotation avec l'arbre menant.

Le moyeu d'entrée 2 peut être lié en rotation par l'intermédiaire des cannelures 5 à la sortie d'un dispositif d'amortissement ou amortisseur (tel qu'un double volant amortisseur, etc.) dont l'entrée est liée, par l'intermédiaire notamment d'un volant moteur, à l'arbre menant formé par un vilebrequin qu'entraîne en rotation un moteur équipant le véhicule automobile.

L'extrémité intérieure de la partie radiale de la coquille 6 et celle extérieure de la partie radiale du moyeu d'entrée 2 sont solidaires, de préférence fixées ensemble par soudage.

En variante, l'extrémité intérieure de la partie radiale de la coquille 6 d'entrée et l'extrémité extérieure de la partie radiale du moyeu d'entrée 2 sont fixées ensemble par rivetage.

Dans l'exemple présenté sur les figures 1 et 2, l'organe d'entrée 3 est formé notamment par un porte-disques 40 agencé pour coopérer avec le premier embrayage E1, par un porte-disques 60 agencé pour coopérer avec le deuxième embrayage E2 et par un voile 11 d'entraînement.

Le voile 11 d'entraînement est entraîné en rotation par le moteur par l'intermédiaire de la coquille 6. La coquille 6 et le voile 11 d'entraînement sont liés en rotation par l'intermédiaire d'une liaison rivetée 7.

Le mécanisme 10 à double embrayage humide présente le fonctionnement suivant :
Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Dans le mécanisme 10 à double embrayage humide, le premier embrayage E1 sert par exemple à la fois au démarrage et à l'engagement des rapports impairs et le deuxième embrayage E2 prend alors en charge les rapports pairs et la marche arrière, en variante les rapports pris en charge par lesdits premier embrayage E1 et deuxième embrayage E2 sont inversés.

Le premier embrayage E1 est par exemple agencé axialement à l'avant du côté de la boîte de vitesses et le deuxième embrayage E2 est par exemple agencé axialement à l'arrière du côté moteur.

De préférence, le premier embrayage E1 et le deuxième embrayage E2 sont à l'état ouvert, encore dit « normalement ouvert », et sont actionnés sélectivement en fonctionnement par un dispositif de commande (non représenté) pour passer de l'état ouvert à l'état fermé.

Le mécanisme 10 à double embrayage humide est commandé hydrauliquement par l'intermédiaire d'un fluide sous pression, généralement de l'huile.

Selon l'exemple de réalisation illustré sur la figure 1, le mécanisme 10 à double embrayage humide comporte un moyeu 25 central agencé de manière à distribuer l'huile sous pression en provenance du dispositif de commande.

De préférence, ledit moyeu 25 central est réalisé en deux parties, un premier moyeu 25a et un deuxième moyeu 25b respectivement associés au premier embrayage E1 et au deuxième embrayage E2.

Le premier moyeu 25a comporte deux perçages 26 et 27 qui sont associés à la commande du premier embrayage E1 situé axialement à l'avant et le deuxième moyeu 25b comporte également deux perçages 28 et 29 qui sont associés à la commande du deuxième embrayage E2 situé axialement à l'arrière.

En variante non représentée, ledit moyeu 25 central est commun au premier embrayage E1 et au deuxième embrayage E2 qui est réalisé en une seule pièce, monobloc.

Le premier embrayage E1 comporte un piston 41 qui est mobile axialement, ici de l'avant vers l'arrière, entre une position débrayée et une position embrayée qui correspondent respectivement aux états ouvert et fermé du premier embrayage E1.

Tel que représenté sur les figures 1 et 2, le piston 41 est commandé en déplacement au moyen d'une chambre 42 de commande délimitée axialement par une face avant d'une partie radiale interne du piston 41 et par la face radiale arrière d'une pièce 43 de fermeture.

La pièce 43 de fermeture est bloquée axialement par rapport au premier moyeu 25a.

Le piston 41 comporte à son extrémité radiale interne des moyens 44 d'étanchéité qui coopèrent avec la surface 45 axiale externe du premier moyeu 25a, lorsque le piston 41 est déplacé axialement entre les positions débrayée et embrayée par la mise en pression de la chambre 42 de commande.

La chambre 42 de commande est alimentée en huile par l'intermédiaire du perçage 27 qui traverse radialement le premier moyeu 25a, le perçage 27 mettant en communication ladite chambre 42 de commande avec le dispositif de commande.

La chambre 42 de commande du piston 41 du premier embrayage E1 est associée à une chambre 46 d'équilibrage délimitée au moins par un piston 47 d'équilibrage.

Avantageusement, le voile 11 d'entraînement constitue le piston 47 d'équilibrage du premier embrayage E1.

Le voile 11 d'entraînement assure donc une double fonction, de transmission de la puissance d'entrée d'une part, et de piston d'équilibrage dans le fonctionnement du premier embrayage E1, d'autre part.

Plus précisément, la fonction du piston 47 d'équilibrage du premier embrayage E1 est assurée principalement par la partie radiale interne dudit voile 11 d'entraînement.

La chambre 46 d'équilibrage du premier embrayage E1 est délimitée axialement par la face radiale avant du piston 47 d'équilibrage formé par la partie radialement interne du voile 11 d'entraînement et par la face radiale arrière du piston 41.

La chambre 46 d'équilibrage est alimentée en huile par l'intermédiaire du perçage 26 que comporte le premier moyeu 25a.

La partie radiale interne du piston 41 du premier embrayage E1 s'étend radialement et elle est disposée axialement entre la chambre 42 de commande, située axialement à l'avant, et la chambre 46 d'équilibrage, située axialement à l'arrière.

Le piston 41 du premier embrayage E1 comporte, à son extrémité radiale extérieure, une partie d'actionnement formée par des doigts 48 qui s'étendent axialement vers l'arrière pour agir sur un ensemble multidisques 50 du premier embrayage E1.

Avantageusement, le voile 11 d'entraînement comporte des ouvertures 49 pour le passage axial desdits doigts 48 formant la partie d'actionnement du piston 41 de l'embrayage E1.

Le piston 41 est commandé pour venir serrer axialement, en position embrayée, ledit ensemble multidisques 50 du premier embrayage E1 contre un ensemble 30 de réaction.

L'ensemble multidisques 50 du premier embrayage E1 comporte au moins des disques 51 de friction qui sont liés en rotation audit premier arbre A1 mené par un porte-disques 52 extérieur. Le porte-disques 52 extérieur forme l'élément de sortie du premier embrayage E1.

Le porte-disques 52 extérieur comporte à la périphérie radiale extérieure une partie axiale qui est munie d'une denture destinée à coopérer avec une denture complémentaire que comporte chaque disque 51 de friction à sa périphérie radiale extérieure.

Le porte-disques 52 extérieur est lié en rotation par engrènement avec les disques 51 de friction et par une liaison cannelée avec ledit premier arbre A1 mené.

Le porte-disques 52 extérieur comporte un moyeu 53 de sortie qui s'étend axialement et comporte radialement à l'intérieur des cannelures axiales qui engrènent avec des cannelures complémentaires du premier arbre A1 mené.

De préférence, le porte-disques 52 extérieur et le moyeu 53 de sortie sont fixés ensemble par soudage, en variante par rivetage.

Les disques 51 de friction comportent chacun sur leurs faces radiales axialement opposées, respectivement avant et arrière, une garniture de friction.

L'ensemble multidisques 50 du premier embrayage E1 comporte des flasques 54 qui sont munis à leur périphérie radiale interne d'une denture 55 pour les lier en rotation avec un porte-disques 40 intérieur.

Le porte-disques 40 intérieur comporte à son extrémité radiale externe une partie axiale comportant une denture 56 externe qui, complémentaire, engrène avec la denture 55 interne de chacun des flasques 54 pour les lier en rotation sans jeu.

Dans l'exemple représenté, les flasques 54 sont formés à partir d'une tôle plane. L'épaisseur de la denture 55 interne est semblable au reste de l'épaisseur du flasque 54.

Les disques 51 de friction sont, unitairement, axialement interposés entre deux flasques 54 successifs. Chacune des garnitures de friction d'un des disques 51 de friction coopère en position embrayée avec l'une des faces radiale des flasques 54 agencés axialement de part et d'autre, en avant et en arrière, dudit disque 51 de friction.

L'ensemble multidisques 50 du premier embrayage E1 comporte axialement un flasque 54 à chacune de ses extrémités, respectivement un flasque 54 avant dont la face radiale avant est destinée à coopérer en position embrayée avec les doigts 48 formant la partie d'actionnement du piston 41 et un flasque 54 arrière dont la face radiale arrière est destinée à coopérer avec un organe de réaction 30a de l'ensemble 30 de réaction.

En variante, le flasque 54 arrière peut présenter un décrochement axial au niveau de la face radiale arrière de sorte que l'épaisseur de la denture 55 interne est différente du reste de l'épaisseur du flasque 54.

Le premier embrayage E1 comporte des moyens élastiques de rappel pour rappeler automatiquement le piston 41 en position débrayée, correspondant à un état ouvert de l'embrayage.

De préférence, les moyens élastiques de rappel du piston 41 sont formés par des rondelles élastiques interposées axialement entre les flasques 54 et agencées radialement à l'intérieur des disques 51 de friction, en dessous des garnitures de friction.

Le deuxième embrayage E2 du mécanisme 10 à double embrayage humide du système 1 de transmission est de conception similaire à celle du premier embrayage E1, le deuxième embrayage E2 étant de type multidisques.

Avantageusement, on se reportera au besoin pour la description du deuxième embrayage E2 à la description détaillée du premier embrayage E1 donnée précédemment.

Le deuxième embrayage E2 comporte un piston 61 qui est mobile axialement, ici de l'arrière vers l'avant, entre une position débrayée et une position embrayée correspondant respectivement aux états ouvert et fermé du deuxième embrayage E2 du mécanisme 10.

Le piston 41 du premier embrayage E1 et le piston 61 du deuxième embrayage E2 dudit mécanisme 10 à double embrayage humide se déplacent axialement en sens opposé pour passer par exemple de la position débrayée à la position embrayée.

Le piston 61 du deuxième embrayage E2 est commandé en déplacement au moyen d'une chambre 62 de commande délimitée axialement par une face arrière d'une partie radiale intérieure du piston 61 et par la face radiale avant d'une pièce 63 de fermeture.

La chambre 62 de commande est alimentée sélectivement en huile par le perçage 29 traversant radialement le deuxième moyeu 25b. Le perçage 29 met en communication la chambre 62 de commande avec le dispositif de commande (non représenté).

La chambre 62 de commande est associée à une chambre 64 d'équilibrage délimitée par au moins un piston 65 d'équilibrage. La chambre 64 d'équilibrage est alimentée en huile par l'intermédiaire du perçage 28 réalisée dans le deuxième moyeu 25b.

Par comparaison avec le piston 47 d'équilibrage du premier embrayage E1 formé par le voile 11 d'entraînement, le piston 65 d'équilibrage du deuxième embrayage E2 est une pièce distincte.

La chambre 64 d'équilibrage est délimitée axialement par la face radiale arrière du piston 65 d'équilibrage et par la face radiale avant du piston 61.

La partie radiale interne du piston 61 s'étend radialement et elle est disposée axialement entre la chambre 62 de commande, située axialement en arrière, et la chambre 64 d'équilibrage, située axialement en avant.

Le piston 61 du deuxième embrayage E2 comporte, à son extrémité radiale extérieure, une partie d'actionnement 66 formée par un bossage qui s'étend axialement vers l'avant en direction d'un ensemble multidisques 70 du deuxième embrayage E2.

L'ensemble multidisques 70 du deuxième embrayage E2 comporte des disques 71 de friction qui sont liés en rotation au deuxième arbre A2 mené par un porte-disques 72 extérieur formant l'élément de sortie de l'embrayage E2.

Le porte-disques 72 extérieur comporte à la périphérie radiale extérieure une partie axiale qui est munie d'une denture interne destinée à coopérer avec une denture externe que comporte chacun des disques 71 de friction.

Le porte-disques 72 extérieur est lié en rotation par engrènement avec les disques 71 de friction et par une liaison cannelée avec ledit deuxième arbre A2 mené.

Le porte-disques 72 extérieur comporte un moyeu 73 de sortie qui s'étend axialement et comporte radialement à l'intérieur des cannelures qui engrènent avec des cannelures complémentaires du deuxième arbre A2 mené.

Les disques 71 de friction comportent chacun sur leurs faces radiales axialement opposées, respectivement avant et arrière, une garniture de friction.

L'ensemble multidisques 70 du deuxième embrayage E2 comporte des flasques 74 qui sont munis à leur périphérie radiale interne d'une denture 75 pour les lier en rotation avec un porte-disques 60 intérieur.

Le porte-disques 60 intérieur comporte à son extrémité radiale externe une partie axiale comportant une denture 76 externe qui engrène avec la denture 75 interne de chacun des flasques 74 pour les lier en rotation sans jeu.

Les disques 71 de friction sont, unitairement, axialement interposés entre deux flasques 74 consécutifs.

Chacune des garnitures de friction d'un des disques 71 de friction coopère en position embrayée avec une face radiale de l'un des deux flasques 74 situés axialement de part et d'autre.

L'ensemble multidisques 70 du deuxième embrayage E2 comporte axialement un flasque 74 à chacune de ses extrémités, respectivement un flasque 74 arrière dont la face radiale arrière est destinée à coopérer, en position embrayée, avec la partie 66 d'actionnement du piston 61 et un flasque 74 avant dont la face radiale avant est destinée à coopérer avec l'organe de réaction 30b de l'ensemble 30 de réaction.

Le deuxième embrayage E2 comporte également des moyens élastiques de rappel pour rappeler automatiquement le piston 61 en position débrayée, correspondant à un état ouvert de l'embrayage. Les moyens de rappel élastiques de l'embrayage E2 sont similaires à ceux utilisé pour l'embrayage E1.

Pour transmettre directement la puissance d'entrée, le mécanisme 10 à double embrayage humide comporte des moyens de fixation 85 communs au premier embrayage E1 et au deuxième embrayage E2 qui lient axialement sans jeu au moins le voile 11 d'entraînement, le porte-disques 40 intérieur du premier embrayage E1, le porte-disques 60 intérieur du deuxième embrayage E2, le piston 65 d'équilibrage et les organes de réaction 30a, 30b de l'ensemble 30 de réaction.

De préférence, les moyens de fixation sont réalisés par rivetage au moyen de rivets 85.

Tel que représenté sur la figure 1, les moyens de fixation 85 du mécanisme 10 à double embrayage humide sont agencés axialement entre le piston 41 du premier embrayage E1 et le piston 61 du deuxième embrayage E2.

Dans le système 1 de transmission représenté aux figures 1 et 2, le premier embrayage E1 et le deuxième embrayage E2 dudit mécanisme 10 à double embrayage humide sont axialement juxtaposés, le premier embrayage E1 et le deuxième embrayage E2 étant agencés axialement de part et d'autre de l'ensemble 30 de réaction.

L'ensemble 30 de réaction comporte au moins un premier organe de réaction 30a et un deuxième organe de réaction 30b qui, respectivement associés au premier embrayage E1 et au deuxième embrayage E2, sont séparés axialement l'un de l'autre par un espace correspondant à un jeu « j ».

Le premier organe de réaction 30a et le deuxième organe de réaction 30b sont par exemple réalisés en tôle.

Le premier organe de réaction 30a et le deuxième organe de réaction 30b sont circonférentiellement continus, de manière à former respectivement une couronne 37a et une couronne 37b.

La couronne 37a est liée à l'organe d'entrée 3 par l'intermédiaire d'une portion de jonction 31a. La portion de jonction 31a est formée sur la couronne 37a de l'organe de réaction 30a.

La couronne 37b est liée à l'organe d'entrée 3 par l'intermédiaire d'une portion de jonction 31b. La portion de jonction 31b est formée sur la couronne 37b de l'organe de réaction 30b.

Avantageusement, l'organe de réaction 30a comporte au moins une zone de contact 32a agencée pour venir en appui contre l'ensemble multidisques 50 du premier embrayage E1 lorsque celui-ci est fermé.

De préférence, le flasque 54 arrière de l'ensemble multidisques 50 vient en appui contre la zone de contact 32a lorsque l'embrayage E1 est fermé.

La zone de contact 32a de l'organe de réaction 30a est orientée vers l'avant en direction du premier embrayage E1.

La zone de contact 32a et la portion de jonction 31a de l'organe de réaction 30a, dans une direction axiale suivant l'axe de rotation O, sont disposées sur des plans décalés axialement.

Comme illustrée sur la figure2, la zone de contact 32a présente une surface de réaction bombée.

En variante, la zone de contact 32a peut présenter une surface de réaction plane.

De préférence, l'organe de réaction 30a comprend des zones de contact 32a réparties angulairement autour de l'axe de rotation O. Chaque zone de contact 32a est formée par une patte 34a de l'organe de réaction 30a.

Dans l'exemple représenté, les pattes 34a s'étendent radialement vers l'extérieur à partir de la couronne 37a et chaque patte 34a est séparée de la patte 34a adjacente par une fente 35a. L'organe de réaction 30a comprend, à titre d'exemple, six pattes 34a réparties de manière régulière autour de l'axe de rotation O et chaque patte s'étend sur un secteur angulaire de l'ordre de 30°.

En variante, en fonction du nombre de zones de contact choisi, la patte 34a peut s'étendre sur un secteur angulaire compris entre 10° et 110°.

Chaque patte 34a comporte un coude sur lequel est formée la zone de contact 32a. Le coude est par exemple obtenu par emboutissage de l'organe de réaction. Le coude a pour avantage de raidir la patte 34a et de limiter axialement le déplacement de l'organe de réaction 30a lors de la fermeture de l'embrayage E1.

Avantageusement, l'organe de réaction 30a comporte une jante 36a sur laquelle viennent se raccorder les pattes 34a, la dite jante 36a est disposée radialement à l'extérieur de la zone de contact 32a de l'organe de réaction 30a.

La jante 36a forme une partie radiale externe circonférentiellement continue de manière à relier toutes les pattes 34a entre-elles. La jante 36a a pour avantage de raidir les pattes 34a et de limiter axialement le déplacement de l'organe de réaction 30a lors de la fermeture de l'embrayage E1.

De préférence, les organes de réaction 30a, 30b des premier et deuxième embrayages E1, E2 sont des pièces identiques de manière à réduire les coûts de fabrication des embrayages E1 et E2. Les organes de réactions 30a, 30b peuvent également être de formes différentes.

Avantageusement, l'organe de réaction 30b comporte au moins une zone de contact 32b agencée pour venir en appui contre l'ensemble multidisques 70 du deuxième embrayage E2 lorsque celui-ci est fermé.

De préférence, le flasque 74 avant de l'ensemble multidisques 70 vient en appui contre la zone de contact 32b lorsque l'embrayage E2 est fermé.

La zone de contact 32b de l'organe de réaction 30b est orientée vers l'arrière en direction du deuxième embrayage E2.

La zone de contact 32b et la portion de jonction 31b de l'organe de réaction 30b, dans une direction axiale suivant l'axe de rotation O, sont disposées sur des plans décalés axialement.

Comme illustrée sur la figure2, la zone de contact 32b présente une surface de réaction bombée.

En variante, la zone de contact 32b peut présenter une surface de réaction plane.

De préférence, l'organe de réaction 30b comprend des zones de contact 32a réparties angulairement autour de l'axe de rotation O. Chaque zone de contact 32b est formée par une patte 34b de l'organe de réaction 30b.

Dans l'exemple représenté, les pattes 34b s'étendent radialement vers l'extérieur à partir de la couronne 37b et chaque patte 34b est séparée de la patte 34b adjacente par une fente 35b.

Chaque patte 34b comporte un coude sur lequel est formée la zone de contact 32b. Le coude est par exemple obtenu par emboutissage de l'organe de réaction. Le coude a pour avantage de raidir la patte 34b et de limiter axialement le déplacement de l'organe de réaction 30b lors de la fermeture de l'embrayage E2.

Avantageusement, l'organe de réaction 30b comporte une jante 36b sur laquelle viennent se raccorder les pattes 34b, la dite jante 36b est disposée radialement à l'extérieur de la zone de contact 32b de l'organe de réaction 30b.

La jante 36b forme une partie radiale externe circonférentiellement continue de manière à relier toutes les pattes 34b entre-elles. La jante 36b a pour avantage de raidir les pattes 34b et de limiter axialement le déplacement de l'organe de réaction 30b lors de la fermeture de l'embrayage E2.

En variante non représentée, le premier organe de réaction et le deuxième organe de réaction peuvent comporter au moins une partie radiale externe circonférentiellement discontinue qui est formée d'une pluralité de pattes. Cette variante se distingue par l'absence de jante externe.

Selon l'invention, l'organe de réaction 30a comportent une portion 31a de jonction sur l'organe d'entrée 3 et une zone de contact 32a, et dans une direction axiale suivant l'axe de rotation O, la zone de contact 32a associée au premier embrayage E1 est plus proche de la portion de jonction 31b de l'organe de réaction 30b associée au deuxième embrayage E2 que de la portion de jonction 31a associée à l'organe de réaction 30a de l'embrayage E1.

Et inversement, l'organe de réaction 30b comportent une portion 31b de jonction sur l'organe d'entrée 3 et une zone de contact 32b, et dans une direction axiale suivant l'axe de rotation O, la zone de contact 32b associée au deuxième embrayage E2 est plus proche de la portion de jonction 31a de l'organe de réaction 30a associée au premier embrayage E1 que de la portion de jonction 31b associée à l'organe de réaction 30b de l'embrayage E2.

Les zones de contact 32a, 32b des premier et deuxième embrayages E1 et E2 sont formées respectivement sur des pièces distinctes.

L'organe de réaction 30a du premier embrayage E1 comporte une pluralité de fentes 35a définissant un espace dans lequel est reçu partiellement l'organe de réaction 30b du deuxième embrayage E2. Les organes de réaction 30 a, 30b des premier et deuxième embrayages E1, E2 se chevauchent axialement de manière à réduire l'encombrement axial du mécanisme 10 à double embrayage humide et du système 1 de transmission. Avantageusement, les deux pattes consécutives de l'un des organes de réaction forment entre-elles une fente dans laquelle s'étend au moins partiellement une patte de l'autre organe de réaction. L'assemblage des organes de réactions 30a, 30b selon l'invention permet de réduire l'encombrement axial du système 1 de transmission. Les zones de contact 32a, 32b respectives des organes de réactions 30a, 30b sont alternées les unes par rapport aux autres.

Dans l'exemple de réalisation présenté sur les figures 1 et 2, le porte-disques 40 de l'organe d'entrée 3 est disposé radialement à l'intérieur de la zone de contact 32a de l'organe de réaction 30a et le porte disque 60 de l'organe d'entrée 3 est disposé radialement à l'intérieur de la zone de contact 32b de l'organe de réaction 30b.

La partie d'actionnement formée par les doigts 48 du piston 41 du premier embrayage E1 et la partie d'actionnement 66 du piston 61 du deuxième embrayage E2 dudit mécanisme 10 à double embrayage humide sont situées radialement sur un même rayon centré sur l'axe O du système 1 de transmission.

Avantageusement, les parties d'actionnement des pistons 41 et 61 sont situées sur le même rayon centré sur l'axe O que la partie sommitale des pattes 34a et 34b formant les zones de contact 32a et 32b.

Le piston 41 du premier embrayage E1 et le piston 61 du deuxième embrayage E2 appliquent chacun un effort de serrage sur l'ensemble multidisques 50, 70 qui leur est associé selon la direction axiale mais suivant un sens opposé, comme est opposée la réaction s'effectuant sur les organes de réaction 30a et 30b.

Les zones de contact 32a, 32b respectives des organes de réactions 30a, 30b sont orientées dans deux sens axiaux opposés et décalés angulairement.

Lors de l'assemblage du mécanisme 10 à double embrayage humide, les organes de réaction 30a, 30b sont montés inversés l'un par rapport à l'autre de manière à mettre les pattes de l'un des organes de réaction dans les fentes de l'autre et vice et versa. De cette manière, la portion de jonction 31a de l'organe de réaction 30a, dans une direction axiale suivant l'axe de rotation O, est disposée axialement entre la zone de contact 32a associée à cet organe de réaction et la zone de contact 32b associée à l'autre organe de réaction 30b. De même, la portion de jonction 31b de l'organe de réaction 30b, dans une direction axiale suivant l'axe de rotation O, est disposée axialement entre la zone de contact 32b associée à cet organe de réaction et la zone de contact 32a associée à l'autre organe de réaction 30a.

Comme illustré sur les figures 1 et 2, les portions de jonction 31a, 31b sont formées dans l'épaisseur de la tôle dans laquelle sont formées les organes de réaction 30a et 30b.

Avantageusement, l'organe de réaction 30a de l'embrayage E1 présente une distance d entre le milieu de l'épaisseur de la portion de jonction 31a et la zone de contact32a, cette distance d étant supérieure ou égale à la somme de la demi-épaisseur de la portion de jonction 31a associée à cet organe de réaction et de l'épaisseur de la portion de jonction 31b associée à l'autre organe de réaction 30b. De même, l'organe de réaction 30b de l'embrayage E2 présente une distance d entre le milieu de l'épaisseur de la portion de jonction 31b et la zone de contact32b, cette distance d étant supérieure ou égale à la somme de la demi-épaisseur de la portion de jonction 31b associée à cet organe de réaction et de l'épaisseur de la portion de jonction 31a associée à l'autre organe de réaction 30a.

L'organe de réaction, réalisé par exemple en tôle, présente une fibre neutre définissant le milieu de l'épaisseur dudit organe de réaction.

La jante du premier organe de réaction 30a et la jante du deuxième organe de réaction 30b sont séparées axialement l'une de l'autre par un espace correspondant au jeu « j ». Grâce au jeu « j » axial, le premier organe de réaction 30a et le deuxième organe de réaction 30b sont libres de se déplacer axialement, indépendamment l'un de l'autre. Le déplacement axial correspond à la flexion soit du premier organe de réaction 30a, soit du deuxième organe de réaction 30b sous la charge axiale transmise par les pistons 41, 61 des premier et deuxième embrayages E1, E2.

Avantageusement, les organes de réaction 30a et 30b peuvent comporter des moyens raidisseurs supplémentaires de type nervures.

On supprime tout risque d'interaction entre le premier organe de réaction 30a du premier embrayage E1 et le deuxième organe de réaction 30b du deuxième embrayage E2 lors du fonctionnement du mécanisme 10 à double embrayage humide.

Les organes de réaction 30a et 30b sont des pièces distinctes de l'organe d'entrée 3.

Par pièces distinctes, on entend que le premier organe de réaction 30a et le deuxième organe de réaction 30b sont des pièces indépendantes l'une de l'autre et cela au moins jusqu'à leur assemblage au sein du mécanisme 10 à double embrayage humide. Comme illustré sur la figure 1, les organes de réactions 30a, 30b sont assemblés sur l'organe d'entrée 3 et les portions de jonctions 31a, 31b sont plaquées l'une sur l'autre à l'aide du moyen de fixation 85 représenté sous la forme d'une série de rivet.

Tel que décrit précédemment, ledit moyeu 25 central est de préférence réalisé en deux parties, respectivement le premier moyeu 25a et le deuxième 25b moyeu.

Dans l'exemple de réalisation représenté aux figures 1 et 2, le premier organe 30a de réaction et le deuxième organe 30b de réaction sont liés respectivement en rotation aux moyeux 25b et 25a, par soudage.

Avantageusement, les moyeux 25b, 25a sont indépendants desdits organes 30a, 30b de réaction de manière à pouvoir notamment être réalisés dans un matériau différent de celui employé pour les organes 30a, 30b de réaction, selon un procédé de fabrication choisi.

En variante non représentée, l'organe de réaction est réalisé en une seule pièce avec le moyeu.

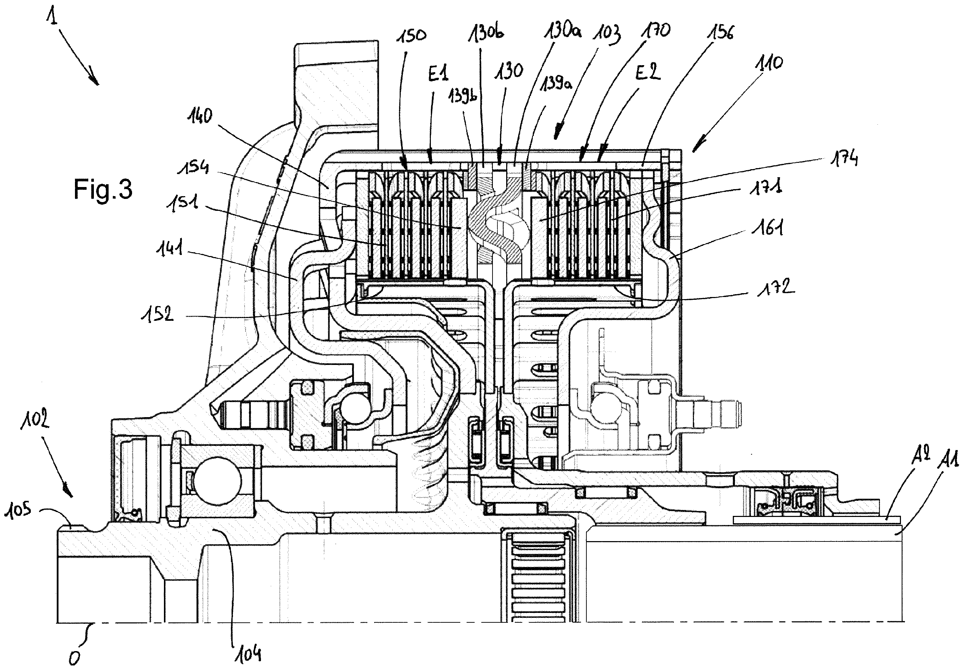

On a représenté sur les figures 3, 4 et 5, un deuxième exemple de réalisation de l'invention avec un système 1 de transmission sensiblement similaire à celui qui vient d'être décrit aux figures 1 et 2, à l'exception du fait notamment que le moyeu d'entrée 102 est lié directement à l'organe d'entrée 103.

Dans cet exemple, le système 1 de transmission comporte un moyeu d'entrée 102 agencé pour être lié en rotation à un arbre menant et un mécanisme 110 à double embrayage humide, comportant un organe d'entrée 103, un premier embrayage E1 et un deuxième embrayage E2 qui sont respectivement de type multidisques. Le mécanisme 110 à double embrayage humide est commandé pour accoupler sélectivement l'arbre menant à un premier arbre A1 mené et à un deuxième arbre A2 mené d'une boite de vitesses.

Le moyeu d'entrée 102 comporte des cannelures 105, ménagées dans la surface cylindrique externe de la partie axiale 104, pour la liaison en rotation avec l'arbre menant.

L'organe d'entrée 103 est formé notamment par un porte-disques 140 agencé pour coopérer avec les premier et deuxième embrayages E1 et E2.

Le porte-disques 140 et le moyeu d'entrée 102 sont solidaires, de préférence fixés ensemble par soudage.

Le premier embrayage E1 et le deuxième embrayage E2 dudit mécanisme 110 à double embrayage humide sont axialement juxtaposés, le premier embrayage E1 et le deuxième embrayage E2 étant agencés axialement de part et d'autre d'un ensemble 130 de réaction.

Comme illustré sur la figure 3, le premier embrayage E1 est agencé axialement à l'arrière du côté moteur et le deuxième embrayage E2 est agencé axialement à l'avant du côté de la boîte de vitesses.

L'ensemble 130 de réaction comporte au moins un premier organe de réaction 130a et un deuxième organe de réaction 130b. Le premier organe de réaction 130a et le deuxième organe de réaction 130b sont circonférentiellement continus, de manière à former respectivement une couronne 137a et une couronne 137b.

La couronne 137a est liée à l'organe d'entrée 103 par l'intermédiaire d'une portion de jonction 131a. La portion de jonction 131a est formée sur la couronne 137a de l'organe de réaction 130a. La portion de jonction 131a est formée par une cannelure 138a qui vient en appui sur une cannelure 156 formée sur l'extrémité radiale externe du porte-disques 140 de l'organe d'entrée 103.

La couronne 137b est liée à l'organe d'entrée 103 par l'intermédiaire d'une portion de jonction 131b. La portion de jonction 131b est formée sur la couronne 137b de l'organe de réaction 130b. La portion de jonction 131b est formée par une cannelure 138b qui vient en appui sur la cannelure 156 formée sur l'extrémité radiale externe du porte-disques 140 de l'organe d'entrée 103.

Avantageusement, l'organe de réaction 130a comporte au moins une zone de contact 132a agencée pour venir en appui contre un ensemble multidisques 150 du premier embrayage E1 lorsque celui-ci est fermé.

Avantageusement, l'organe de réaction 130b comporte au moins une zone de contact 132b agencée pour venir en appui contre un ensemble multidisques 170 du deuxième embrayage E2 lorsque celui-ci est fermé.

A la différence du premier exemple de réalisation de l'invention, le porte-disques 140 de l'organe d'entrée 103 est disposé radialement à l'extérieur des zones de contact 132a, 132b des organes de réaction 130a, 130b.

Le premier embrayage E1 comporte un piston 141 qui est mobile axialement, ici de l'arrière vers l'avant, entre une position débrayée et une position embrayée. Le piston 141 est commandé pour venir serrer axialement, en position embrayée, l'ensemble multidisques 150 du premier embrayage E1 contre l'organe de réaction 130a.

L'ensemble multidisques 150 du premier embrayage E1 comporte au moins des flasques 154 qui sont liés en rotation audit premier arbre A1 mené par un porte-disques 152 intérieur.

Dans l'exemple représenté, les flasques 154 sont formés à partir d'une tôle plane et la liaison en rotation avec le porte-disques 140 se fait par l'intermédiaire de cannelures.

Le porte-disques 152 intérieur forme l'élément de sortie du premier embrayage E1.

L'ensemble multidisques 150 du premier embrayage E1 comporte au moins des disques 151 de friction qui sont liés en rotation à l'arbre menant par le porte-disques 140 extérieur.

Le porte-disques 140 extérieur comporte à son extrémité radiale externe une partie axiale comportant une denture 156 interne qui, de manière complémentaire, engrène avec la denture 153 externe de chacun des disques 151 de friction pour les lier en rotation sans jeu.

Les disques 151 de friction sont, unitairement, axialement interposés entre deux flasques 154 successifs.

L'ensemble multidisques 150 du premier embrayage E1 comporte axialement un flasque 154 avant dont la face radiale avant est destinée à coopérer en position embrayée avec l'organe de réaction 130a de l'ensemble 130 de réaction.

Le deuxième embrayage E2 comporte un piston 161 qui est mobile axialement, ici de l'avant vers l'arrière, entre une position débrayée et une position embrayée. Le piston 161 est commandé pour venir serrer axialement, en position embrayée, l'ensemble multidisques 170 du deuxième embrayage E2 contre l'organe de réaction 130b.

L'ensemble multidisques 170 du deuxième embrayage E2 comporte au moins des flasques 174 qui sont liés en rotation audit premier arbre A2 mené par un porte-disques 172 intérieur.

Dans l'exemple représenté, les flasques 174 sont formés à partir d'une tôle plane et la liaison en rotation avec le porte-disques 140 se fait par l'intermédiaire de cannelures.

Le porte-disques 172 intérieur forme l'élément de sortie du premier embrayage E2.

L'ensemble multidisques 170 du deuxième embrayage E2 comporte au moins des disques 171 de friction qui sont liés en rotation à l'arbre menant par le porte-disques 140 extérieur.

Le porte-disques 140 extérieur comporte à son extrémité radiale externe une partie axiale comportant une denture 156 interne qui, de manière complémentaire, engrène avec la denture 173 externe de chacun des disques 171 de friction pour les lier en rotation sans jeu.

Les disques 171 de friction sont, unitairement, axialement interposés entre deux flasques 174 successifs.

L'ensemble multidisques 170 du deuxième embrayage E2 comporte axialement un flasque 174 arrière dont la face radiale arrière est destinée à coopérer en position embrayée avec l'organe de réaction 130b de l'ensemble 130 de réaction.

Selon l'invention, l'organe de réaction 130a comportent une portion 131a de jonction sur l'organe d'entrée 103 et une zone de contact 132a, et dans une direction axiale suivant l'axe de rotation O, la zone de contact 132a associée au premier embrayage E1 est plus proche de la portion de jonction 131b de l'organe de réaction 130b associée au deuxième embrayage E2 que de la portion de jonction 131a associée à l'organe de réaction 130a de l'embrayage E1.

Et inversement, l'organe de réaction 130b comportent une portion 131b de jonction sur l'organe d'entrée 103 et une zone de contact 132b, et dans une direction axiale suivant l'axe de rotation O, la zone de contact 132b associée au deuxième embrayage E2 est plus proche de la portion de jonction 131a de l'organe de réaction 130a associée au premier embrayage E1 que de la portion de jonction 131b associée à l'organe de réaction 130b de l'embrayage E2.

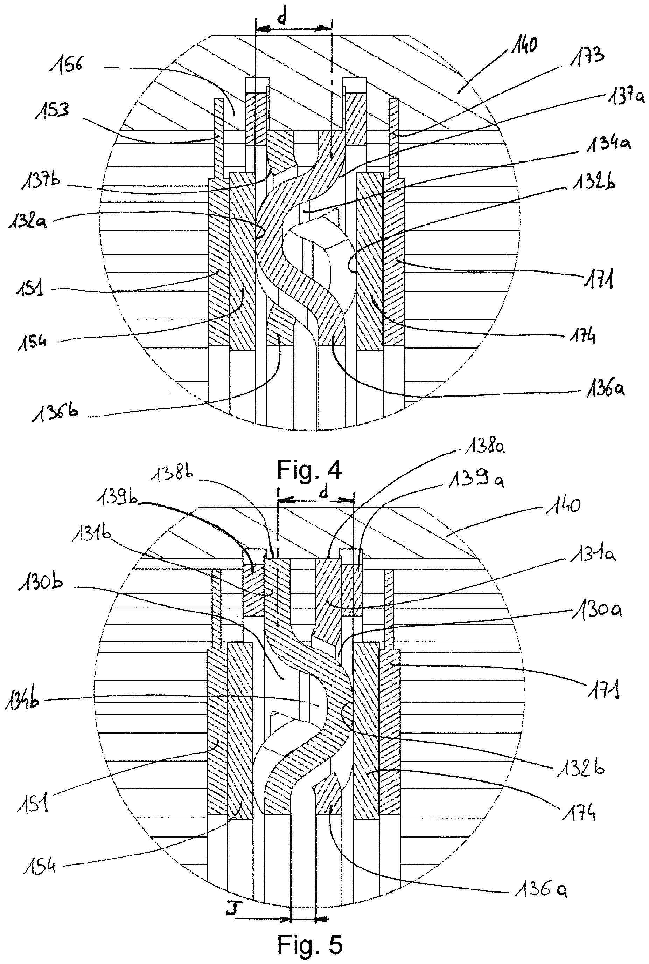

Comme illustré sur les figures 4 et 5, les portions de jonctions 131a, 131b sont formées dans l'épaisseur de la tôle dans laquelle sont formées les organes de réaction 130a et 130b. A la différence du premier exemple de réalisation de l'invention, les portions de jonction 131a, 131b des organes d'entrée 130a, 130b sont séparées par un espace axial.

Les portions de jonction 131a, 131b sont respectivement en contact avec des anneaux élastiques 139a, 139b insérés dans des gorges aménagées sur la partie axiale du porte-disques 140. Les organes de réactions 130a, 130b sont retenus axialement par l'intermédiaire de ces anneaux élastiques 139a et 139b.

Avantageusement, l'organe de réaction 130a de l'embrayage E1 présente une distance d entre le milieu de l'épaisseur de la portion de jonction 131a et la zone de contact 132a, cette distance d étant supérieure ou égale à la somme de la demi-épaisseur de la portion de jonction 131a associée à cet organe de réaction et de l'épaisseur de la portion de jonction 131b associée à l'autre organe de réaction 130b. De même, l'organe de réaction 130b de l'embrayage E2 présente une distance d entre le milieu de l'épaisseur de la portion de jonction 131b et la zone de contact 132b, cette distance d étant supérieure ou égale à la somme de la demi-épaisseur de la portion de jonction 131b associée à cet organe de réaction et de l'épaisseur de la portion de jonction 131a associée à l'autre organe de réaction 130a.

Comme illustré sur les figures 4 et 5, chaque zone de contact 132a est formée par une patte 134a de l'organe de réaction 130a. Les pattes 134a s'étendent radialement vers l'intérieur à partir de la couronne 137a et chaque patte 134a est séparée de la patte 134a adjacente par une fente 135a.

Avantageusement, l'organe de réaction 130a comporte une jante 136a sur laquelle viennent se raccorder les pattes 134a, la dite jante 136a est disposée radialement à l'intérieur de la zone de contact 132a de l'organe de réaction 130a.

De même, chaque zone de contact 132b est formée par une patte 134b de l'organe de réaction 130b. Les pattes 134b s'étendent radialement vers l'intérieur à partir de la couronne 137b et chaque patte 134b est séparée de la patte 134b adjacente par une fente 135b.

Avantageusement, l'organe de réaction 130b comporte une jante 136b sur laquelle viennent se raccorder les pattes 134b, la dite jante 136b est disposée radialement à l'intérieur de la zone de contact 132b de l'organe de réaction 130b.

Selon l'invention, la jante du premier organe de réaction 130a et la jante du deuxième organe de réaction 130b sont séparées axialement l'une de l'autre par un espace correspondant à un jeu « j ».

## Revendications

1. Système (1) de transmission, notamment pour un véhicule automobile, comportant autour d'un axe de rotation (O) au moins :
- un moyeu d'entrée (2 ; 102) qui est agencé pour être lié en rotation à un arbre menant, et
- un mécanisme (10 ; 110) à double embrayage humide comportant :
∘ un organe d'entrée (3 ; 103) lié en rotation au moyeu d'entrée (2 ; 102) et formé notamment par un porte-disques (40 ; 60 ; 140) pour transmettre le couple venant de l'arbre menant;
∘ au moins un premier embrayage (E1) et un deuxième embrayage (E2) comportant chacun un ensemble multidisques (50 ; 150 ; 70 ; 170) et un organe de réaction (30a ; 30b; 130a; 130b), l'ensemble multidisques venant en appui contre une zone de contact (32a ; 32b ; 132a ; 132b) de l'organe de réaction lorsque l'embrayage associé est fermé,
**caractérisé en ce que** chaque organe de réaction (30a ; 30b ; 130a ; 130b) comporte une portion de jonction (31a ; 31b ; 131a ; 131b) sur l'organe d'entrée, et
dans une direction axiale suivant l'axe de rotation (O), la zone de contact (32a ; 32b ; 132a ; 132b) associée à l'un des embrayages est plus proche de la portion de jonction de l'organe de réaction associée à l'autre embrayage que de la portion de jonction associée à l'organe de réaction de cet embrayage.

2. Système (1) de transmission selon la revendication 1, **caractérisé en ce que** l'organe de réaction (30a ; 30b ; 130a ; 130b) de l'un des embrayages (E1 ; E2) comporte au moins une fente (35a ; 35b ; 135a ; 135b) définissant un espace dans lequel est reçu partiellement l'organe de réaction de l'autre embrayage.

3. Système (1) de transmission selon l'une des revendications 1 à 2, **caractérisé en ce que** les zones de contact (32a ; 32b ; 132a ; 132b) respectives des organes de réactions sont orientées dans deux sens axiaux opposés et décalés angulairement.

4. Système (1) de transmission selon l'une des revendications 1 à 3, **caractérisé en ce que** la zone de contact (32a ; 32b ; 132a ; 132b) et la portion de jonction (31a ; 31b ; 131a ; 131b) de l'un des organes de réaction, dans une direction axiale suivant l'axe de rotation (O), sont disposées sur des plans décalés axialement.

5. Système (1) de transmission selon l'une des revendications précédentes, **caractérisé en ce que** la portion de jonction (31a ; 31b ; 131a ; 131b) de l'un des organes de réaction, dans une direction axiale suivant l'axe de rotation (O), est disposée axialement entre la zone de contact associée à cet organe de réaction et la zone de contact associée à l'autre organe de réaction.

6. Système (1) de transmission selon l'une des revendications précédentes, **caractérisé en ce que** l'organe de réaction (30a ; 30b ; 130a ; 130b) de l'un des embrayages (E1 ; E2) présente une distance d entre le milieu de l'épaisseur de la portion de jonction et la zone de contact, cette distance d étant supérieure ou égale à la somme de la demi-épaisseur de la portion de jonction associée à cet organe de réaction et de l'épaisseur de la portion de jonction associée à l'autre organe de réaction.

7. Système (1) de transmission selon l'une des revendications précédentes, **caractérisé en ce que** chaque organe de réaction (30a ; 30b ; 130a ; 130b) comprend des zones de contact (32a ; 32b ; 132a ; 132b) réparties angulairement autour de l'axe de rotation (O).

8. Système (1) de transmission selon l'une des revendications précédentes, **caractérisé en ce que** chaque zone de contact (32a ; 32b ; 132a ; 132b) est formée par une patte (34a ; 34b ; 134a ; 134b) de l'organe de réaction.

9. Système (1) de transmission selon la revendication 8, **caractérisé en ce que** deux pattes (34a ; 34b ; 134a ; 134b) consécutives de l'un des organes de réaction forment entre-elles une fente (35a ; 35b ; 135a ; 135b) dans laquelle s'étend au moins partiellement une patte de l'autre organe de réaction.

10. Système (1) de transmission selon la revendication 8, **caractérisé en ce que** la patte (34a ; 34b ; 134a ; 134b) comporte un coude sur lequel est formée la zone de contact (32a ; 32b ; 132a ; 132b).

11. Système (1) de transmission selon l'une des revendications précédentes, **caractérisé en ce que** le porte-disques (140) de l'organe d'entrée (103) est disposé radialement à l'extérieur de la zone de contact (132a ; 132b) de l'organe de réaction (130a ; 130b).

12. Système (1) de transmission selon la revendication précédente, **caractérisé en ce que** l'organe de réaction (130a; 130b) comporte une jante (136a ; 136b) sur laquelle viennent se raccorder les pattes (134a ; 134b), la dite jante est disposée radialement à l'intérieur de la zone de contact (132a ; 132b) de l'organe de réaction.

13. Système (1) de transmission selon l'une des revendications 1 à 10, **caractérisé en ce que** le porte-disques (40 ; 60) de l'organe d'entrée (3) est disposé radialement à l'intérieur de la zone de contact (32a ; 32b) de l'organe de réaction (30a ; 30b).

14. Système (1) de transmission selon la revendication précédente, **caractérisé en ce que** l'organe de réaction (30a ; 30b) comporte une jante (36a ; 36b) sur laquelle viennent se raccorder les pattes (34a ; 34b), la dite jante est disposée radialement à l'extérieur de la zone de contact (32a ; 32b) de l'organe de réaction.

15. Système (1) de transmission selon l'une des revendications 12 et 14, **caractérisé en ce que** la jante (36a ; 136a) du premier organe de réaction (30a ; 130a) et la jante (36b ; 136b) du deuxième organe de réaction (30b ; 130b) sont séparées axialement l'une de l'autre par un espace correspondant à un jeu « j ».

## Patentansprüche

1. Getriebesystem (1), insbesondere für ein Kraftfahrzeug, aufweisend um eine Rotationsachse (O) herum mindestens:
- eine Eingangsnabe (2; 102), die dazu eingerichtet ist, drehfest mit einer Antriebswelle verbunden zu werden, und
- einen Nasslauf-Doppelkupplungsmechanismus (10; 110), aufweisend:
∘ ein Eingangsorgan (3; 103), das drehfest mit der Eingangsnabe (2; 102) verbunden ist und insbesondere durch einen Lamellenträger (40; 60; 140) gebildet wird, um das von der Antriebswelle kommende Drehmoment zu übertragen;
∘ mindestens eine erste Kupplung (E1) und eine zweite Kupplung (E2), die jeweils eine Mehrlamellenanordnung (50; 150; 70; 170) und ein Gegendruckorgan (30a; 30b; 130a; 130b) aufweisen, wobei sich die Mehrlamellenanordnung an einem Kontaktbereich (32a; 32b; 132a; 132b) des Gegendruckorgans abstützt, wenn die zugehörige Kupplung geschlossen ist,
**dadurch gekennzeichnet, dass** jedes Gegendruckorgan (30a; 30b; 130a; 130b) einen Verbindungsabschnitt (31a; 31b; 131a; 131b) auf dem Eingangsorgan aufweist, und
in einer axialen Richtung entlang der Rotationsachse (O) der Kontaktbereich (32a; 32b; 132a; 132b), der zu der einen der Kupplungen gehört, dem Verbindungsabschnitt des Gegendruckorgans, der zu der anderen Kupplung gehört, näher ist als der Verbindungsabschnitt, der zum Gegendruckorgan dieser Kupplung gehört.

2. Getriebesystem (1) nach Anspruch 1, **dadurch gekennzeichnet, dass** das Gegendruckorgan (30a; 30b; 130a; 130b) der einen der Kupplungen (E1; E2) mindestens einen Spalt (35a; 35b; 135a; 135b) aufweist, der einen Raum definiert, in dem teilweise das Gegendruckorgan der anderen Kupplung aufgenommen ist.

3. Getriebesystem (1) nach einem der Ansprüche 1 bis 2, **dadurch gekennzeichnet, dass** die jeweiligen Kontaktbereiche (32a; 32b; 132a; 132b) der Gegendruckorgane in zwei entgegengesetzte axiale Richtungen gerichtet sind und winklig versetzt sind.

4. Getriebesystem (1) nach einem der Ansprüche 1 bis 3, **dadurch gekennzeichnet, dass** der Kontaktbereich (32a; 32b; 132a; 132b) und der Verbindungsabschnitt (31a; 31b; 131a; 131b) des einen der Gegendruckorgane in einer axialen Richtung entlang der Rotationsachse (O) auf axial versetzten Ebenen angeordnet sind.

5. Getriebesystem (1) nach einem der vorhergehenden Ansprüche, **dadurch gekennzeichnet, dass** der Verbindungsabschnitt (31a; 31b; 131a; 131b) des einen der Gegendruckorgane in einer axialen Richtung entlang der Rotationsachse (O) axial zwischen dem Kontaktbereich, der zu diesem Gegendruckorgan gehört, und dem Kontaktbereich, der zu dem anderen Gegendruckorgan gehört, angeordnet ist.

6. Getriebesystem (1) nach einem der vorhergehenden Ansprüche, **dadurch gekennzeichnet, dass** das Gegendruckorgan (30a; 30b; 130a; 130b) der einen der Kupplungen (E1; E2) einen Abstand d zwischen der Mitte der Dicke des Verbindungsabschnitts und dem Kontaktbereich aufweist, wobei dieser Abstand d größer oder gleich der Summe aus der halben Dicke des Verbindungsabschnitts, der zu diesem Gegendruckorgan gehört, und der Dicke des Verbindungsabschnitts, der zu dem anderen Gegendruckorgan gehört, ist.

7. Getriebesystem (1) nach einem der vorhergehenden Ansprüche, **dadurch gekennzeichnet, dass** jedes Gegendruckorgan (30a; 30b; 130a; 130b) Kontaktbereiche (32a; 32b; 132a; 132b) umfasst, die um die Rotationsachse (O) herum winklig verteilt sind.

8. Getriebesystem (1) nach einem der vorhergehenden Ansprüche, **dadurch gekennzeichnet, dass** das jeder Kontaktbereich (32a; 32b; 132a; 132b) durch eine Lasche (34a; 34b; 134a; 134b) des Gegendruckorgans gebildet wird.

9. Getriebesystem (1) nach Anspruch 8, **dadurch gekennzeichnet, dass** zwei aufeinander folgende Laschen (34a; 34b; 134a; 134b) des einen der Gegendruckorgane untereinander einen Spalt (35a; 35b; 135a; 135b) bilden, in den sich zumindest teilweise eine Lasche des anderen Gegendruckorgans erstreckt.

10. Getriebesystem (1) nach Anspruch 8, **dadurch gekennzeichnet, dass** die Lasche (34a; 34b; 134a; 134b) eine Kröpfung aufweist, auf welcher der Kontaktbereich (32a; 32b; 132a; 132b) gebildet ist.

11. Getriebesystem (1) nach einem der vorhergehenden Ansprüche, **dadurch gekennzeichnet, dass** der Lamellenträger (140) des Eingangsorgans (103) radial außerhalb des Kontaktbereichs (132a; 132b) des Gegendruckorgans (130a; 130b) angeordnet ist.

12. Getriebesystem (1) nach dem vorhergehenden Anspruch, **dadurch gekennzeichnet, dass** das Gegendruckorgan (130a; 130b) einen Kranz (136a; 136b) aufweist, an den die Laschen (134a; 134b) anschließen, wobei der Kranz radial innerhalb des Kontaktbereichs (132a; 132b) des Gegendruckorgans angeordnet ist.

13. Getriebesystem (1) nach einem der Ansprüche 1 bis 10, **dadurch gekennzeichnet, dass** der Lamellenträger (40; 60) des Eingangsorgans (3) radial innerhalb des Kontaktbereichs (32a; 32b) des Gegendruckorgans (30a; 30b) angeordnet ist.

14. Getriebesystem (1) nach dem vorhergehenden Anspruch, **dadurch gekennzeichnet, dass** das Gegendruckorgan (30a; 30b) einen Kranz (36a; 36b) aufweist, an dem die Laschen (34a; 34b) anschließen, wobei der Kranz radial außerhalb des Kontaktbereichs (32a; 32b) des Gegendruckorgans angeordnet ist.

15. Getriebesystem (1) nach einem der Ansprüche 12 und 14, **dadurch gekennzeichnet, dass** der Kranz (36a; 136a) des ersten Gegendruckorgans (30a; 130a) und der Kranz (36b; 136b) des zweiten Gegendruckorgans (30b; 130b) voneinander axial um einen Zwischenraum getrennt sind, der einem Spiel "j" entspricht.

## Claims

1. Transmission system (1), in particular for a motor vehicle, comprising about an axis of rotation (O) at least:
- an input hub (2; 102) which is arranged so as to be linked in rotation with a driving shaft, and
- a dual wet clutch mechanism comprising:
∘ an input member (3; 103) that is linked in rotation with the input hub (2; 102) and is formed in particular by a disc carrier (40; 60; 140) for the purpose of transmitting the torque from the driving shaft;
∘ at least one first clutch (E1) and one second clutch (E2), each comprising a multi-disc assembly (50; 150; 70; 170) and a reaction member (30a; 30b; 130a; 130b), the multi-disc assembly coming to bear against a contact zone (32a; 32b; 132a; 132b) of the reaction member when the associated clutch is closed,
**characterized in that** each reaction member (30a; 30b; 130a; 130b) comprises a junction portion (31a; 31b; 131a; 131b) on the input member, and
in an axial direction along the axis of rotation (O), the contact zone (32a; 32b; 132a; 132b) associated with one of the clutches is closer to the junction portion of the reaction member associated with the other clutch than to the junction portion associated with the reaction member this clutch.

2. Transmission system (1) according to Claim 1, **characterized in that** the reaction member (30a; 30b; 130a; 130b) of one of the clutches (E1; E2) comprises at least one slot (35a; 35b; 135a; 135b) defining a space in which the reaction member of the other clutch is partially received.

3. Transmission system (1) according to either of Claims 1 and 2, **characterized in that** the respective contact zones (32a; 32b; 132a; 132b) of the reaction members are oriented in two opposite and angularly offset axial directions.

4. Transmission system (1) according to one of Claims 1 to 3, **characterized in that** the contact zone (32a; 32b; 132a; 132b) and the junction portion (31a; 31b; 131a; 131b) of one of the reaction members, in an axial direction along the axis of rotation (O), are arranged on axially offset planes.

5. Transmission system (1) according to one of the preceding claims, **characterized in that** the junction portion (31a; 31b; 131a; 131b) of one of the reaction members, in an axial direction along the axis of rotation (O), is arranged axially between the contact zone associated with this reaction member and the contact zone associated with the other reaction member.

6. Transmission system (1) according to one of the preceding claims, **characterized in that** the reaction member (30a; 30b; 130a; 130b) of one of the clutches (E1; E2) has a distance d between the middle of the thickness of the junction portion and the contact zone, this distance d being greater than or equal to the sum of the half-thickness of the junction portion associated with this reaction member and the thickness of the junction portion associated with the other reaction member.

7. Transmission system (1) according to one of the preceding claims, **characterized in that** each reaction member (30a; 30b; 130a; 130b) comprises contact zones (32a; 32b; 132a; 132b) that are angularly distributed around the axis of rotation (O).

8. Transmission system (1) according to one of the preceding claims, **characterized in that** each contact zone (32a; 32b; 132a; 132b) is formed by a tab (34a; 34b; 134a; 134b) of the reaction member.

9. Transmission system (1) according to Claim 8, **characterized in that** two consecutive tabs (34a; 34b; 134a; 134b) of one of the reaction members form between them a slot (35a; 35b; 135a; 135b) into which a tab of the other reaction member extends at least partially.

10. Transmission system (1) according to Claim 8, **characterized in that** the tab (34a; 34b; 134a; 134b) comprises an elbow on which the contact zone (32a; 32b; 132a; 132b) is formed.

11. Transmission system (1) according to one of the preceding claims, **characterized in that** the disc carrier (140) of the input member (103) is arranged radially outside the contact zone (132a; 132b) of the reaction member (130a; 130b).

12. Transmission system (1) according to the preceding claim, **characterized in that** the reaction member (130a; 130b) comprises a rim (136a; 136b) on which the tabs (134a; 134b) come to connect, said rim is arranged radially inside the contact zone (132a; 132b) of the reaction member.

13. Transmission system (1) according to one of Claims 1 to 10, **characterized in that** the disc carrier (40; 60) of the input member (3) is arranged radially inside the contact zone (32a; 32b) of the reaction member (30a; 30b).

14. Transmission system (1) according to the preceding claim, **characterized in that** the reaction member (30a; 30b) comprises a rim (36a; 36b) on which the tabs (34a; 34b) come to connect, said rim is arranged radially outside the contact zone (32a; 32b) of the reaction member.

15. Transmission system (1) according to either of Claims 12 and 14, **characterized in that** the rim (36a; 136a) of the first reaction member (30a; 130a) and the rim (36b; 136b) of the second reaction member (30b; 130b) are separated axially from one another by a space corresponding to a clearance "j".
